# EUROPÄISCHE PATENTSCHRIFT

(11) **EP 1 243 498 B1**
(45) Veröffentlichungstag und Bekanntmachung des Hinweises auf die Patenterteilung: **16.08.2006**
(21) Anmeldenummer: 02005710.5
(22) Anmeldetag: 13.03.2002
(51) Int. Cl.: B62D 25/08

(54) **Zentraler Geräteträger**
Central support for an apparatus
Support d'appareillages central

(30) Priorität: 20.03.2001 DE 10113380
(43) Veröffentlichungstag der Anmeldung: 25.09.2002
(73) Patentinhaber: MAN Nutzfahrzeuge Aktiengesellschaft, 80976 München (DE)
(72) Erfinder: Lamché, Oliver, Dipl.-Ing., 81825 München (DE)

(56) Entgegenhaltungen:
- EP-A- 0 378 260
- DE-A- 3 820 644
- US-A- 5 484 034

## Beschreibung

Die Erfindung geht aus von einem Geräteträger eines Nutzfahrzeugs, als Halter, Stütz-, Lager- und Befestigungsorgan für eine Anzahl verschiedener Fahrzeugaggregate, wie beispielsweise Kraftstofffiltereinheit, einen Motorölbehälter etc. sowie Rohre und Leitungen gemäß der Gattung von Patentanspruch 1.

Eine derartiger Geräteträger ist aus der DE 40 06 418 A1 bekannt und wird durch ein Vorderwagenmodul eines Nutzfahrzeugs gebildet, an dem neben einer Verbundlenkerachse auch Befestigungshalter und Böcke für sämtliche im vorderen Fahrzeugbereich erforderliche Aggregate befestigt sind. Der Vorderwagenmodul ist als Schweißkonstruktion ausgeführt, ebenso sind Befestigungshalter und Lagerböcke für die Fahrzeugaggregate am Vorderwagenmodul angeschweißt. Falls an einige der Aggregate vorgebogene Rohre und Leitungen angeschlossen werden müssen, wie dies beispielsweise bei einem Motorölbehälter der Fall ist, ist eine exakte Platzierung des jeweiligen Aggregats am Geräteträger erforderlich, da andernfalls die vorgebogenen Verrohrungen nicht mit den zugeordneten Anschlüssen der Aggregate fluchten. Bei Schweißkonstruktionen wie bei den im vorliegenden Fall an den Vorderwagenmodul angeschweißten Befestigungshaltern und Lagerböcken ergeben sich bekanntermaßen jedoch relativ große Toleranzen, so dass eine passgenaue Montage der Aggregate und Leitungen erst nach teilweise aufwendigen Anpassungsarbeiten möglich ist.

Aus der DE 38 20 644 A1 ist ein Vorbau für Kraftfahrzeuge mit einem Wasserkasten bekannt, dessen vordere Wand leicht lösbar ausgeführt ist. Die Wand weist nach unten offene Aussparungen auf, durch die Leitungen geführt sind. Die Wand bildet außerdem eine mit verschiedenen Bauteilen bestückte, vormontierte Baugruppe.

Der vorliegenden Erfindung liegt die Aufgabe zugrunde, einen Geräteträger der eingangs erwähnten Art zu schaffen, an welchem eine passgenaue Anordnung der einzelnen Aggregate und deren bedarfsorientierte Positionierbarkeit (ggf. Platztauschbarkeit) möglich ist.

Erfindungsgemäß wird diese Aufgabe durch die kennzeichnenden Merkmale von Anspruch 1 gelöst.

### Vorteile der Erfindung

Da beim Geräteträger gemäß der Erfindung gegebenenfalls auf Zwischenhalter zur Befestigung der Aggregate, Rohre und Leitungen verzichtet werden kann, können mehrere Fertigungsschritte samt sich hieraus ergebender Toleranzen und Einbaufolgefehler entfallen. Aufgrund geringerer Teilevielfalt werden die Montagezeit und damit auch die Fertigungskosten reduziert. Die Befestigung der Aggregate, Rohre und Leitungen erfolgt vielmehr direkt am Geräteträger, beispielsweise an Durchgangsöffnungen wie Durchgangslöcher, Aussparungen und Langlöcher etc., welche gegebenenfalls als Stütz-, Lagerstellen und Anlageflächen dienen und durch entsprechende Laserschneidbearbeitung hergestellt werden. Die Aussparungen am Geräteträger können entweder zwecks Unterbringung diverser Aggregate oder zwecks Gewichtsersparnis vorgesehen sein. Bezogen auf die Lage der Aggregate, Rohre und Leitungen am Geräteträger relativ zueinander ist bei solchen lasergeschnittenen Durchgangsöffnungen von wesentlich geringeren Toleranzen auszugehen als dies etwa bei angeschweißten Lagerböcken oder bei durch spanabhebende Verfahren wie Bohren nach- oder endbearbeitenden Guss- oder Schmiedeteilen als Geräteträger der Fall ist. Infolgedessen ist bei der anschließenden Verrohrung und Verkabelung der Aggregate keine Nacharbeit mehr erforderlich, da diese exakt an den für sie vorgesehenen Stellen platziert sind. Wenn sämtliche oder zumindest ein Großteil von Aggregaten und Leitungen des Fahrzeugs an einem einzigen Geräteträger festgelegt sind, ergeben sich kurze Leitungs- und Rohrlängen, darüber hinaus entsteht ein übersichtlicher und auch optisch aufgeräumter Gesamteindruck.

Der Geräteträger ist als länglicher, einstückiger Blechstreifen ausgebildet, der an seinem oberen und unteren Bereich jeweils eine Anschraubfläche aufweist. Die Anschraubflächen können alternativ als bereichsweise vorgesehene Haltezungen ausgebildet sein.

Der Geräteträger ist entweder längs oder quer zur Fahrtrichtung des Fahrzeuges angeordnet und von einer Außenseite des Fahrzeuges leicht zugängig. Die Anbringung des Geräteträgers kann beispielsweise mittelbar oder unmittelbar an Längsträgem des Fahrzeuges erfolgen.

Der Geräteträger ist samt Aggregate vormontierbar und als komplette Baueinheit in das Fahrzeug einsetzbar, wodurch sich die Montageflexibilität steigert und die Bandmontagezeiten verkürzen. Die fahrzeugunabhängige Vormontage erleichtert außerdem die Arbeit des Werkers, indem vormontierte Geräteträger in Puffern bevorratet werden können.

Durch die in den Unteransprüchen aufgeführten Maßnahmen sind vorteilhafte Weiterbildungen und Verbesserungen der im Patentanspruch 1 angegebenen Erfindung möglich.

Gemäß einer weiteren Ausgestaltung der Erfindung können die Durchgangsöffnungen am Geräteträger derart ausgebildet und angeordnet sein, dass jedem Aggregat, jedem Rohr und jeder Leitung ein definierter Befestigungsplatz zugeordnet ist. Somit ist eine größtmögliche Übersichtlichkeit der Platzbelegung am Geräteträger gewährleistet.

Eine weitere, besonders zu bevorzugende Maßnahme sieht vor, dass die Durchgangsöffnungen wie Durchgangslöcher, Aussparungen und Langlöcher etc. am Geräteträger derart verteilt angeordnet sind, dass zur flexiblen Fertigung von Geräteträgern für verschiedene Fahrzeugtypen an jedem Befestigungsplatz unterschiedliche Aggregate, Rohre und Leitungen ohne Kollisionen mit benachbarten hervorzurufen befestigbar sind. Somit ist ein einziger Geräteträgertyp für verschiedene Fahrzeugtypen verwendbar, so dass sich aufgrund der hierdurch erzielten Fertigungsflexibilität niedrigere Fertigungskosten ergeben.

Gemäß einer besonders zu bevorzugenden Maßnahme kann der Geräteträger im Motorraum eines Busses mit Heckmotor quer zur Fahrtrichtung, insbesondere an mehreren, von einer an einem Heckgerippe festgelegten Quertraverse nach unten ragenden Schenkeln von Sitzbankrohren der in Fahrtrichtung gesehen letzten Sitzbank befestigt sein. Aufgrund der Doppelfunktion der Sitzbankrohre als Lagerstellen von Sitzbank und Geräteträger ergibt sich eine geringere Teilevielfalt, was sich positiv auf das Gewicht des Busses auswirkt. Darüber hinaus ist der Geräteträger bei geöffneter Motorraumklappe von hinten leicht zugängig.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig. 1: eine perspektivische Einzelansicht eines Geräteträgers eines Linienbusses als Ausführungsbeispiel ohne Aggregate oder Leitungen;
- Fig. 2: den Geräteträger von Fig.1 mit montierten Aggregaten und Leitungen für einen Linienbus mit Dieselmotorantrieb;
- Fig. 3: den Geräteträger von Fig.1 mit montierten Aggregaten und Leitungen für einen Linienbus mit Erdgasantrieb;
- Fig. 4: eine perspektivische Ansicht des Geräteträgers von Fig. 2 in einem in das Heckgerippe des Linienbusses eingebauten Zustand.

### Beschreibung des Ausführungsbeispiels

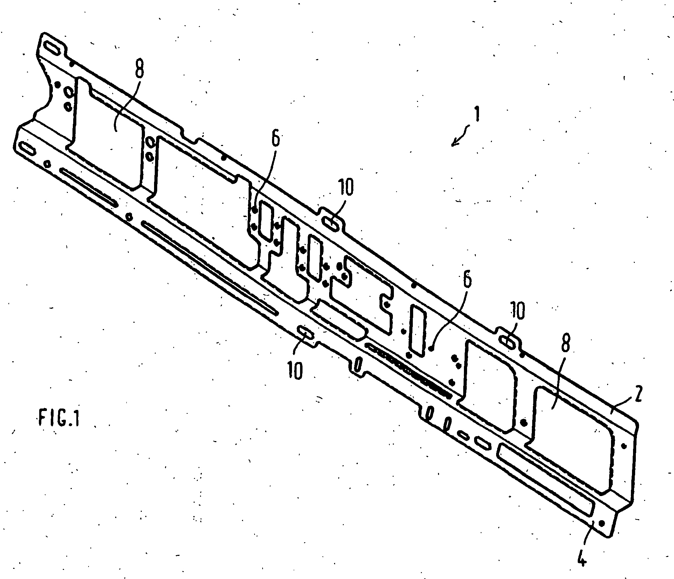

In Fig. 1 ist ein Ausführungsbeispiel eines Geräteträgers 1 als Halter, Stütz-, Lager- und Befestigungsorgan für zumindest einen Großteil von Aggregaten, Verrohrungen und Leitungen eines Linienbusses dargestellt. Der Geräteträger 1 besteht aus einem einstückigen, länglichen Blechstreifen, der an seinem oberen und unteren Rand zur Ausbildung von Anschraubflächen 2, 4 jeweils winkelig abgekantet ist. Die Anschraubflächen 2; 4 können, wie in Fig. 1 gezeigt, durchgehende Flächen sein oder gemäß einer hier nicht gezeigten Variante durch Flächenbereiche, wie beispielsweise Haltezungen gegeben sein. Der Blechstreifen 1 weist zahlreiche Durchgangsöffnungen 6, 8, 10 wie Durchgangslöcher 6, Aussparungen 8 und Langlöcher 10 auf, welche durch Laserschneiden hergestellt sind.

Zumindest einige der Aussparungen 8 können in ihren Ausmaßen auf die Unterbringung beispielsweise die Aufnahme von Aggregaten abgestimmt sein, weshatb diese Aussparungen 8 jeweils eine dem zugeordneten Aggregat entsprechende Kontur aufweisen Zumindest einige der Durchgangslöcher 6 dienen als Durchstecklager für Befestigungsschrauben, mit denen Aggregate am Geräteträger 1 festgeschraubt sind. Die Langlöcher 10 im Bereich der Anschraubflächen 2, 4 sind als Achraubaugen ausgebildet.

Sämtliche Durchgangsöffnungen 6, 8, 10 am Geräteträger 1 sind derart ausgebildet und angeordnet, dass jedem Aggregat, jedem Rohr und jeder Leitung ein bestimmter Befestigungsplatz zugeordnet ist. Alternativ oder zusätzlich können die Durchgangsöffnungen 6, 8, 10 am Geräteträger 1 derart verteilt angeordnet sein, dass zur flexiblen Fertigung von bestückten Geräteträgern 1 für verschiedene Bustypen an jedem Befestigungsplatz unterschiedliche Aggregate und Leitungen ohne Kollisionen mit benachbarten hervorzurufen befestigbar sind.

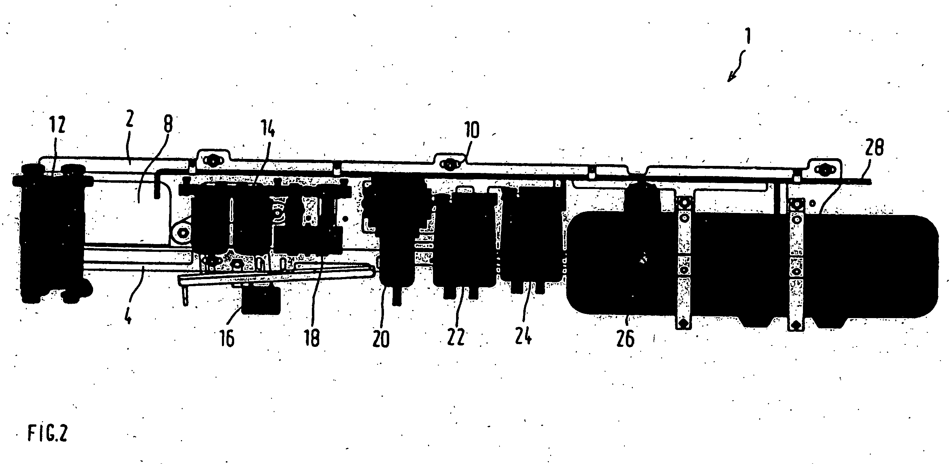

Fig. 2 zeigt den Geräteträger 1 mit an ihm gegebenenfalls über Zwischenhalter festgelegten Aggregaten, Rohren und Leitungen für einen Linienbus mit Dieselmotorantrieb. Bei den Aggregaten, Rohren und Leitungen handelt es sich um motorbezogene und um nicht- motorbezogene. Alternativ kann es sich auch um ausschließlich motorbezogene oder um ausschließlich nichtmotorbezogene Aggregate handeln. Beispielsweise sind auf derselben Seite des Geräteträgers 1 und entlang seiner Längserstreckung eine Serviceeinheit für eine Klimaanlage 12, eine Kraftstofffiltereinheit 14, eine Motorraumleuchte 16, ein Durchflusssensor 18, ein Kraftstofffilter 20 mit integriertem Wasserabscheider, ein erster Lenkölbehälter 22, ein zweiter Lenkölbehälter 24 für eine gelenkte Nachlaufachse, ein Motorölbehälter 26 sowie am oberen Rand eine Motorentlüftungsleitung 28 vorzugsweise durch Schrauben- und Klemmverbindungen montiert.

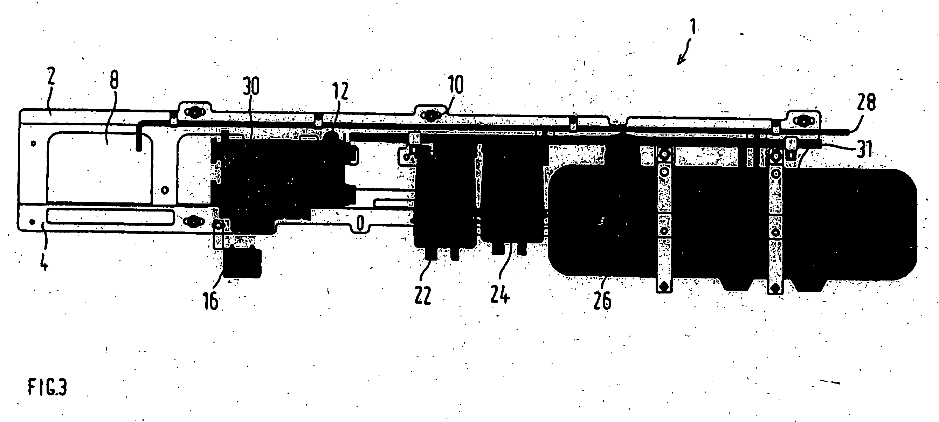

In Fig. 3 ist der Geräteträger von Fig.1 dargestellt, wobei er Aggregate, Rohre und Leitungen eines Linienbusses mit Erdgasantrieb wie beispielsweise eine Zusammenbaueinheit aus Gaskomponenten 30, die Motorraumleuchte 16, die Serviceeinheit für die Klimaanlage 12, den ersten Lenkölbehälter 22, den zweiten Lenkölbehälter 24 für die gelenkte Nachlaufachse, den Motorölbehälter 26 sowie am oberen Rand die Motorentlüftungsleitung 28 und eine Gaskomponentenentlüftungsleitung 31 trägt. Der Geräteträger 1 ist samt Aggregaten, Rohren und Leitungen als komplette Baueinheit vormontierbar und als komplette Baueinheit in den Bus einsetzbar.

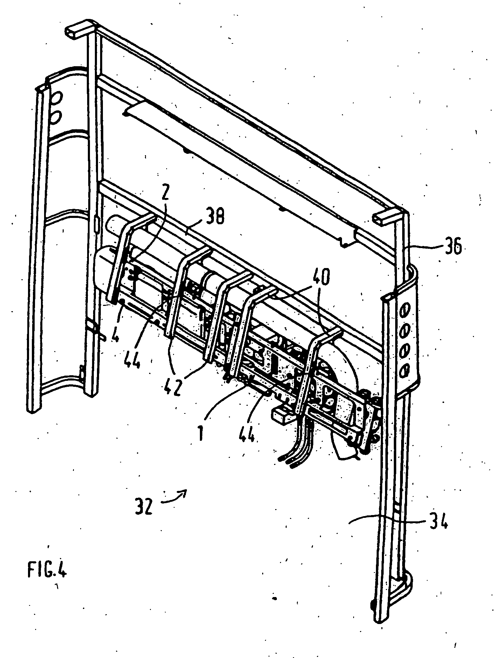

Fig. 4 zeigt in perspektivischer Ansicht die Einbausituation des Geräteträgers 1 von Fig.2 im Linienbus mit Dieselmotor als Heckantrieb. Der Geräteträger 1 ist im Heckbereich 32 des Linienbusses, in einem oberen Abschnitt des Motorraumes 34, oberhalb des Dieselmotors und quer zur Fahrtrichtung befestigt. Hierzu dienen in bevorzugter Weise mehrere, im wesentlichen L-förmig gebogene, von einer an einem Heckgerippe 36 festgelegten Quertraverse 38 mit ihrem einen Schenkel 40 jeweils in Fahrtrichtung und mit ihrem anderen Schenkel 42 jeweils nach unten ragende und in Fahrzeuglängsrichtung verlaufenden Ebenen angeordnete Sitzbankrohre 44, welche die in Fahrtrichtung gesehen letzte Sitzbank tragen. Der Geräteträger 1 ist dann mit seinen beiden Anschraubflächen 2, 4 jeweils an dem nach unten ragenden und quer zu seiner Längserstreckung verlaufenden Schenkel 42 eines Sitzbankrohres 44 vorzugsweise durch Schraubverbindungen derart befestigt, dass die an ihm festgelegten Aggregate, Rohre und Leitungen in Heckrichtung ragen und bei geöffneter Motorraumklappe zugängig sind.

In einer hier nicht bildlich aufgeführten Alternative kann der Geräteträger 1 längs in Fahrtrichtung des Fahrzeuges, beispielsweise eines Qmnibusses, an hierfür geeigneten Trägern angeordnet und von der Außenseite des Fahrzeuges zugängig sein.

Unabhängig von der Ausgestaltung des Geräteträgers 1 kann aufgrund seiner geringen Fertigungstoieranzen bedarfsweise auf das Vorsehen von möglichen Zwischehhaltern verzichtet werden, welche zur Halterung am Geräteträger 1 zu fixierender Bauteile (Fahrzeugaggregate, Rohre, Leitungen) vorsehbar sind.

## Patentansprüche

1. Geräteträger (1) eines Nutzfahrzeugs, als Halter, Stütz-, Lager- und Befestigungsorgan für eine Anzahl verschiedener Fahrzeugaggregate, wie beispielsweise eine Kraftstofffiltereinheit (20), einen Motorölbehälter (26) etc. sowie Rohre und Leitungen, wobei am Geräteträger (1) zur Aufnahme und Befestigung der Fahrzeugaggregate, Rohre und Leitungen entsprechende Durchgangsöffnungen (6, 8, 10) wie beispielsweise Durchgangslöcher (6), Aussparungen (8) und/oder Langlöcher (10) vorgesehen sind, **dadurch gekennzeichnet, dass** der Geräteträger als länglicher, einstückiger Blechstreifen (1) ausgebildet ist, der an seinem oberen und unteren Bereich Anschraubflächen aufweist, und dass die Durchgangsöffnungen (6, 8, 10) durch Laserschneiden gefertigt sind, und dass der Geräteträger (1) entweder längs oder quer zur Fahrtrichtung des Fahrzeuges angeordnet ist und dass die Aggregate, Rohre und Leitungen von einer Außenseite des Fahrzeuges zugängig sind, und dass der Geräteträger (1) samt Aggregaten, Rohren und Leitungen vormontierbar und als komplette Baueinheit in das Fahrzeug einsetzbar ist.

2. Geräteträger nach Anspruch 1, **dadurch gekennzeichnet, dass** die Durchgangsöffnungen (6, 8, 10) am Geräteträger (1) derart ausgebildet und angeordnet sind, dass jedem Aggregat, jedem Rohr und jeder Leitung ein definierter Befestigungsplatz zugeordnet ist.

3. Geräteträger nach einem der Ansprüche 1 und 2, **dadurch gekennzeichnet, dass** die Durchgangsöffnungen (6, 8, 10) am Geräteträger (1) derart verteilt angeordnet sind, dass zur flexiblen Fertigung von Geräteträgern (1) für verschiedene Fahrzeugtypen an jedem Befestigungsplatz unterschiedliche Aggregate und Leitungen ohne Kollisionen mit benachbarten hervorzurufen befestigbar sind.

4. Geräteträger nach einem der vorhergehenden Ansprüche 1 bis 3, **dadurch gekennzeichnet, dass** er im Motorraum eines Busses mit Heckmotor quer zur Fahrtrichtung, insbesondere an mehreren, von einer an einem Heckgerippe (36) festgelegten Querträger (38) nach unten ragenden Schenkeln (42) von Sitzbankrohren (44) der in Fahrtrichtung gesehen letzten Sitzbank befestigt ist.

5. Geräteträger nach Anspruch 4, **dadurch gekennzeichnet, dass** die Aggregate, Rohre und Leitungen auf der von der Sitzbank weg weisenden Seite des Geräteträgers (1) und bei geöffneter Motorraumklappe von außen zugängig angeordnet sind.

6. Geräteträger nach einem der vorhergehenden Ansprüche 1 bis 5, **dadurch gekennzeichnet, dass** an ihm zumindest ein Großteil der Fahrzeugaggregate (12, 14, 16, 18, 20, 22, 24, 26, 30) und Leitungen (28, 31) an exakt für diese reservierte Positionen festgelegt ist.

7. Fahrzeug, insbesondere Nutzfahrzeug, beinhaltend einen Geräteträger (1) nach einem der vorhergehenden Ansprüche 1 bis 6.

## Claims

1. Equipment carrier (1) for a commercial vehicle, designed as a bracket and, support, bearing and fastening organ for a number of different vehicle units, eg a fuel filter unit (20), an engine oil reservoir (26) etc. and tubes and pipes, whereby corresponding passage orifices (6, 8, 10), eg passage holes (6), recesses (8) and/or longitudinal slots (10), are provided on the equipment carrier (1) for supporting and fastening the vehicle units, tubes and pipes, **characterised in that** the equipment carrier is designed as a longitudinal, single-piece sheet-metal strip (1) featuring screw-on faces in its upper and lower areas and that the passage orifices (6, 8, 10) are made by laser-cutting, that the equipment carrier (1) is arranged in either longitudinal or transverse direction relative to the vehicle's driving direction, that the units, tubes and pipes are accessible from one external side of the vehicle and that the equipment carrier (1) together with the units, tubes and pipes can be preassembled and installed in the vehicle as a complete constructional unit.

2. Equipment carrier according to Claim 1, **characterised in that** passage orifices (6, 8, 10) in the equipment carrier (1) are designed and arranged so that a defined attachment point is assigned to each and every unit, tube and pipe.

3. Equipment carrier according to one of the Claims 1 and 2, **characterised in that** the passage orifices (6, 8, 10) in the equipment carrier (1) are arranged in a distributed manner so that for the flexible manufacture of equipment carriers (1) for various types for vehicles different units and pipes can be attached at each and every attachment point without collision with adjacent items.

4. Equipment carrier according to one of the Claims 1 to 3, **characterised in that** it is fastened in the engine compartment of a bus/coach with rear-mounted engine installed in transverse direction relative to the driving direction, particularly to several legs (42) on seat bench tubes (4) of the seat bench which is rearmost in respect of the driving direction, said legs (42) pointing downwards from a transverse member (38) provided on a rear skeleton (36).

5. Equipment carrier according to Claim 4, **characterised in that** the units, tubes and pipes are arranged on that side of the equipment carrier (1) which points away from the seat bench and are accessible from the outside when the engine compartment flap is open.

6. Equipment carrier according to one of the foregoing Claims 1 to 5, **characterised in that** at least a large number of the vehicle units (12, 14, 16, 18, 20, 24, 26, 30) and pipes (28, 31) on the equipment carrier (1) are fastened to positions specifically reserved for them.

7. Vehicle, particularly a commercial vehicle, including an equipment carrier (1) according to one of the foregoing Claims 1 to 6.

## Revendications

1. Porte-appareils (1) d'un véhicule industriel, sous forme de support, organe d'appui, de logement et de fixation de différents organes du véhicule, comme une unité de filtrage du carburant (20), un réservoir d'huile moteur (26), etc., et de tubes et conduites, des ouvertures de passage (6, 8, 10), comme par exemple des orifices de passage (6), évidements (8) et/ou trous oblongs (10) étant prévues sur le porte-appareils (1) pour le logement et la fixation des organes du véhicule, tubes et conduites, **caractérisé en ce que** le porte-appareils est constitué d'une bande de tôle (1) allongée et en une seule partie, présentant sur sa partie supérieure et sa partie inférieure des surfaces de vissage, que les ouvertures de passage (6, 8, 10) sont fabriquées par découpage au laser, que le porte-appareils (1) est disposé soit parallèlement, soit perpendiculairement au sens de la marche du véhicule et que les organes, tubes et conduites sont accessibles à partir d'un côté extérieur du véhicule, et que le porte-appareils (1) peut être préassemblé avec les organes, tubes et conduites et posé dans le véhicule comme unité modulaire complète.

2. Porte-appareils selon la revendication 1, **caractérisé en ce que** les ouvertures de passage (6, 8, 10) sur le porte-appareils (1) sont constituées et disposées de telle sorte qu'un emplacement de fixation défini est affecté à chaque organe, chaque tube et chaque conduite.

3. Porte-appareils selon l'une des revendications 1 et 2, **caractérisé en ce que** les ouvertures de passage (6, 8, 10) sur le porte-appareils (1) sont réparties de telle sorte qu'il est possible de fixer différents organes et conduites à chaque emplacement de fixation sans entraîner de collisions avec les organes et conduites voisins, de manière à permettre une fabrication flexible des porte-appareils (1) pour différents types de véhicules.

4. Porte-appareils selon l'une des revendications précédentes 1 à 3, **caractérisé en ce qu'**il est fixé dans le compartiment moteur d'un bus à moteur à l'arrière disposé transversalement au sens de la marche, en particulier sur plusieurs montants (42) de tubes de banquette (44) de la dernière banquette dans le sens de la marche descendant d'une traverse (38) prévue sur une ossature arrière (36).

5. Porte-appareils selon la revendication 4, **caractérisé en ce que** les organes, tubes et conduites sont disposés sur le côté du porte-appareils (1) opposé à la banquette et sont accessibles de l'extérieur lorsque la trappe du compartiment moteur est ouverte.

6. Porte-appareils selon l'une des revendications précédentes 1 à 5, **caractérisé en ce qu'**au moins une grande partie des organes du véhicule (12, 14, 16, 18, 20, 22, 24, 26, 30) et conduites (28, 31) sont fixés à des positions précisément réservées pour ceux-ci.

7. Véhicule, en particulier véhicule industriel, comportant un porte-appareils (1) selon l'une des revendications précédentes 1 à 6.
